# EUROPÄISCHE PATENTSCHRIFT

(11) **EP 3 487 635 B1**
(45) Veröffentlichungstag und Bekanntmachung des Hinweises auf die Patenterteilung: **30.11.2022**
(21) Anmeldenummer: 17740614.7
(22) Anmeldetag: 14.06.2017
(51) Int. Cl.: B05C 17/00, B29C 70/52

(54) **KLEBEPISTOLE**
GLUE GUN
PISTOLET À COLLE

(30) Priorität: 23.07.2016 DE 102016008847
(43) Veröffentlichungstag der Anmeldung: 29.05.2019
(73) Patentinhaber: 9T Labs AG, 8048 Zurich (CH)
(72) Erfinder: EICHENHOFER, Florian, 88693 Deggenhausertal (DE); EICHENHOFER, Martin, 88693 Deggenhausertal (DE)
(74) Vertreter: Karl, Christof
(86) Internationale Anmeldenummer: PCT/EP2017/000693
(87) Internationale Veröffentlichungsnummer: WO 2018/019398

(56) Entgegenhaltungen:
- WO-A1-2015/169414
- WO-A2-2010/046305
- US-A- 5 091 036

## Beschreibung

Die vorliegende Erfindung betrifft eine Klebepistole gemäß dem Oberbegriff des Anspruches 1 und ein Verfahren zum Betreiben einer Klebepistole.

Klebepistolen werden in den verschiedensten technischen Anwendungen eingesetzt, um Teile mittels einer herzustellenden stoffschlüssigen Verbindung als Klebeverbindung miteinander zu verbinden. Klebepistolen weisen ein Lagerungsmittel zur Lagerung von thermoplastischem Kunststoff als Klebstoff auf. Das Lagerungsmittel ist beispielsweise dazu ausgebildet, um stabförmigen thermoplastischen Klebstoff an der Klebepistole zu lagern. Mittels einer Heizeinrichtung wird der thermoplastische Kleber erwärmt und anschließend durch eine Austrittsdüse aus der Klebepistole ausgeleitet, sodass dadurch ein Strang aus dem erwärmten thermoplastischen Klebstoff auf miteinander stoffschlüssig zu verbindende Teile aufgebracht werden kann. Nach dem Abkühlen und Erhärten des thermoplastischen Klebstoffs sind dadurch zwei Teile mittels der Klebeverbindung miteinander verbunden. In nachteiliger Weise ist es erforderlich, die Stäbe häufig an der Klebepistole nachzufüllen, weil das Lagerungsmittel nur einen Stab oder nur eine geringe Anzahl von Stäben aufnehmen kann. Dadurch ist die Klebepistole in der Handhabung nicht praktikabel, weil bei länger anhaltenden Klebevorgängen ständig manuell der Stab aus dem thermoplastischen Klebstoff nachgefüllt werden muss. Der aus der Austrittsdüse austretende Strang aus dem thermoplastischen Klebstoff kann ferner auch nur geringe Zugkräfte aufnehmen, sodass dadurch eine Klebeverbindung zwischen zwei Teilen, die hohe Zugkräfte erfordert, nicht hergestellt werden kann.

Aus der WO 2015 / 169 414 A1 ist ein Verfahren zur Herstellung eines zweidimensionalen oder räumlichen Fachwerkes (1) bekannt, mit Stäben (2), die an Knoten mit wenigstens einem anderen Stab (2) und/oder einem anderen Bauteil verbunden sind, aus einem Verbundmaterial mit Fasern und einer Matrix mit den Schritten: Herstellen der Stäbe (2) aus dem Verbundmaterial, Verbinden der Stäbe (2) an den Knoten mit wenigstens einem anderen Stab (2) und/oder dem anderen Bauteil.

Die Wo 2010 / 046 305 A2 betrifft ein Verfahren zur Herstellung mindestens eines faserverstärkten Kunststoffprofiles (10) durch Pultrusion auf der Basis einer thermoplastischen Matrix (12) mit in die Matrix (12) imprägnierten Fasern (14). Es wird vorgeschlagen, dass die Matrix (12) nach Durchführung des Pultrusionsverfahrens mindestens teilweise aufgeschäumt wird.

Die US 5 091 036 A beschreibt eine Vorrichtung zum Pultrudieren von thermoplastischen, harzimprägnierten, faserigen Substrukturen, welche die Substrukturen auf eine Temperatur knapp unterhalb der Schmelztemperatur des Harzes erhitzt. Die erhitzten Teilstrukturen werden dann gleichzeitig durch einen Kanal gezogen, um sie an einen gewünschten Querschnitt anzupassen. Mindestens ein Teil des Umfangs dieser Passage wird durch einen Wellenleiter gebildet. Der Wellenleiter wird mit einer Ultraschallfrequenz in einer vorbestimmten Richtung in Schwingung versetzt, um die Ultraschallschwingung in die Substrukturen innerhalb des Durchgangs zu leiten.

Die DE 20 2013 007 889 U1 zeigt eine Heißklebepistole mit einem winkelförmigen Gehäuse, mit einem ersten Schenkel - Düsenschenkel -, der eine Heizeinrichtung für Schmelzkleber aufnimmt und an dessen einem Ende eine Austrittsdüse für den Schmelzkleber angeordnet ist, mit einem einen Handgriff bildenden zweiten Schenkel - Griffschenkel -, mit einem an dem Gehäuse gelagerten, handbetätigbaren Bedienteil, mit dem eine Vorschubeinrichtung betätigbar ist, die insbesondere strangförmigen Schmelzkleber der Heizeinrichtung zuführt, die den Schmelzkleber erwärmt, sodass ein verflüssigter Teil des Schmelzklebers nach dem Erwärmen aus der Austrittsdüse austreten kann, und mit einem Ständer zum insbesondere aufrechten Abstellen der Heißklebepistole auf einer separaten Lagerfläche in Benutzungspausen, wobei der Ständer an dem Bedienteil angeordnet ist.

Die EP 0 423 388 A1 zeigt eine Klebepistole mit einem Führungskanal für thermoplastischen Kunststoff, einer Düse zum Austragen des verflüssigten Kunststoffs und einem elektrischen Widerstands-Heizkörper zum Schmelzen des Kunststoffs, wobei der Heizkörper unmittelbar im Führungskanal und im Bereich der Düse angeordnet ist.

Die Aufgabe der vorliegenden Erfindung besteht deshalb darin, eine Klebepistole und ein Verfahren zum Betreiben einer Klebepistole zur Verfügung zu stellen, bei der Klebstoff auch in größeren Mengen an der Klebepistole bevorratet werden kann und Teile mit einem Strang aus faserverstärkten Kunststoff mit Klebeverbindungen miteinander verbunden werden können, so dass die Klebeverbindungen auch großen Kräften Stand halten.

Diese Aufgabe wird gelöst mit einer Klebepistole, umfassend: ein Gehäuse, wenigstens ein Lagerungsmittel zur Lagerung von, vorzugsweise thermoplastischem oder duroplastischem, Kunststoff, eine Heizeinrichtung, eine Austrittsdüse zum Ausleiten des erwärmten Kunststoffes aus der Klebepistole, eine Extrusionseinheit für die Formgebung eines zu extrudierenden Stranges mit Kunststoff, eine Fördervorrichtung zum Fördern des, vorzugsweise thermoplastischen oder duroplastischen, Kunststoffes von dem Lagerungsmittel zu der Heizeinrichtung und durch die Austrittsdüse, wobei die Klebepistole eine Pultrusionseinheit zur Konsolidierung von Fasern und, vorzugsweise thermoplastischen oder duroplastischen, Kunststoff umfasst. Aufgrund der Ausbildung der Klebepistole mit einer Pultrusionseinheit und einer Extrusionseinheit kann dadurch auch faserverstärkter, vorzugsweise thermoplastischer oder duroplastischer, Kunststoff als Klebstoff an der Klebepistole erwärmt und durch die Austrittsdüse ausgeleitet werden. Dadurch weist der an der Austrittsdüse ausgeleitete, vorzugsweise thermoplastische oder duroplastische, faserverstärkte Kunststoff hohe Belastbarkeit hinsichtlich der Aufnahme von Zugkräften auf. Dadurch können auch zwei Teile bzw. Bauteile dahingehend stoffschlüssig miteinander verbunden werden, dass der extrudierte Strang aus dem faserverstärkten Kunststoff große Kräfte aufnehmen kann. Die Konsolidierung in der Pultrusionseinheit ist das stoffschlüssige Verbinden der Fasern mit dem Kunststoff. Vorzugsweise bewirkt die Konsolidierung zusätzlich, dass der Kunststoff nach der Konsolidierung in der Pultrusionseinheit, d. h. dem Erwärmen des Kunststoffs in der Pultrusionseinheit und dem abschließenden vollständigen Abkühlen nach dem Austreten aus der Klebepistole, nicht mehr biegbar ist, weil optional der nicht erwärmte Kunststoff vor dem Einführen in die Pultrusionseinheit biegbar ist. Das Einleiten des Erhärtungsvorganges bei duroplastischem Kunststoff wird vorzugsweise dadurch ausgeführt, dass der Kunststoff in der Pultrusionseinheit und/oder Extrusionseinheit oberhalb einer thermischen Aktivierungstemperatur erwärmt wird, so dass nach dem Austreten und vollständigen Abkühlen des duroplastischen Kunststoffes aus der Klebepistole der duroplastische Kunststoff irreversibel erhärtet. Das Abkühlen des duroplastischen Kunststoffes zwischen der Pultrusionseinheit und der Extrusionseinheit wird dahingehend ausgeführt, dass der duroplastische Kunststoff in der Extrusionseinheit noch verformt werden kann, beispielsweise aufgrund einer geringen Abkühlung des duroplastischen Kunststoffes zwischen der Pultrusionseinheit und der Extrusionseinheit oberhalb thermischen Aktivierungstemperatur und/oder der geringen Zeit, welche der duroplastische Kunststoff nach dem Abkühlen zwischen der Pultrusionseinheit und der Extrusionseinheit und bis zum Ausleiten aus der Extrusionseinheit benötigt, so dass der duroplastische Kunststoff nur geringfügig bis zum Ausleiten aus der Extrusionseinheit erhärtet und noch verformt werden kann. In der Extrusionseinheit erfolgt die Formgebung des zu extrudierenden Stranges.

In einer zusätzlichen Ausgestaltung sind in Förderrichtung des Kunststoffes zuerst die Pultrusionseinheit und anschließend die Extrusionseinheit ausgebildet.

In einer weiteren Variante ist die Austrittsdüse an der Extrusionseinheit ausgebildet.

Zweckmäßig umfasst die Pultrusionseinheit eine erste Heizeinrichtung und die Extrusionseinheit eine zweite Heizeinrichtung.

In einer zusätzlichen Ausgestaltung ist zwischen der Pultrusionseinheit und der Extrusionseinheit ein Freiraum vorhanden, so dass der Kunststoff nach dem Austreten aus einem Pultrusionskanal der Pultrusionseinheit und vor dem Einführen in einen Extrusionskanal der Extrusionseinheit innerhalb des Freiraumes angeordnet ist. Nach dem Austreten des Stranges aus der Pultrusionseinheit und vor dem Einführen des Stranges in die Extrusionseinheit kann dadurch der Strang in dem Freiraum teilweise abkühlen und geringfügig erhärten, sodass dadurch der Strang beispielsweise auch von einer Fördervorrichtung entsprechend gefördert werden kann.

In einer zusätzlichen Ausgestaltung ist die Fördervorrichtung zwischen der Pultrusionseinheit und der Extrusionseinheit angeordnet, insbesondere in dem Freiraum zwischen der Pultrusionseinheit und der Extrusionseinheit.

In einer ergänzenden Variante ist die Fördervorrichtung als wenigstens eine Förderrolle ausgebildet.

In einer weiteren Ausgestaltung umfasst die Fördervorrichtung zwei Förderrollen zur Anordnung eines Stranges des Kunststoffes zwischen den zwei Förderrollen, insbesondere entspricht der Abstand zwischen den Förderflächen der zwei Förderrollen zur Auflage auf den Strang des Kunststoffes im Wesentlichen dem Durchmesser des Pultrusionskanales an einem Ende des Pultrusionskanales in Förderrichtung des thermoplastischen Kunststoffes und/oder entspricht dem Durchmesser des Extrusionskanales an einem Anfang des Extrusionskanales in Förderrichtung des Kunststoffes. Vorzugsweise ist dabei der Abstand zwischen den Förderflächen, das heißt den radialen Außenseiten der zwei Förderrollen bzw. der zwei Förderräder, geringfügig kleiner als der Durchmesser des Stranges, sodass dadurch die Förderflächen der Förderrollen mit einer Druckkraft auf dem Strang aufliegen. Dadurch ist eine Förderung möglich und aufgrund des teilweise abgekühlten Strangs an den Förderrollen kann die Förderung des Stranges auch ohne eine entsprechende große Verformung des Strangs ausgeführt werden, da der Strang aufgrund des teilweisen Abkühlens an den Förderrollen bereits teilweise erhärtet ist, jedoch ist anschließend in der Extrusionseinheit eine Verformung möglich, weil beispielsweis nur in der Extrusionseinheit der duroplastische Kunststoff auf die thermische Aktivierungstemperatur erwärmt wird für den Beginn der irreversiblen Erhärtung des duroplastischen Kunststoffes.

In einer zusätzlichen Ausgestaltung dient das Lagerungsmittel zur Lagerung von auf einer Spule aufgewickeltem strangförmigem, vorzugsweise thermoplastischem oder duroplastischem, Kunststoff. Das Lagerungsmittel, beispielsweise als ein Lagerungsstab ausgebildet, kann damit zur Lagerung einer Spule dienen. Auf der Spule kann eine große Menge eines Garns, insbesondere eines Hybridgarns gelagert werden, sodass dadurch auch große Mengen oder Längen des Strangs aus der Austrittsdüse ausgeleitet werden können, ohne dass ein Nachbefüllen der Klebepistole mit Kunststoff notwendig ist. Der Kunststoff auf der Spule, welcher vorzugsweise in der Form von Fasern auf der Spule aufgewickelt ist, kann gebogen werden. Zweckmäßig umfasst die Klebepistole eine Spule mit aufgewickeltem strangförmigem unkonsolidiertem, vorzugsweise thermoplastischem oder duroplastischem, Kunststoff.

In einer zusätzlichen Ausgestaltung ist der strangförmige, vorzugsweise thermoplastische oder duroplastische, Kunststoff als ein Hybridgarn mit Fasern, insbesondere Glasfasern, Karbonfasern und/oder Aramidfasern, und dem, vorzugsweise thermoplastischen oder duroplastischen, Kunststoff ausgebildet. Das Hybridgarn umfasst Fasern und den, vorzugsweise thermoplastischen oder duroplastischen, Kunststoff. Dadurch kann der aus der Austrittsdüse extrudierte Strang aufgrund der Anordnung der Fasern in dem extrudierten Strang große Zugkräfte aufnehmen. In vorteilhafter Weise können dadurch zwei Bauteile auch dahingehend miteinander verbunden werden, dass von dem extrudierten Strang, der zusätzlich auch eine Klebeverbindung zwischen den beiden Bauteilen herstellt, von diesem extrudierten Strang auch große Zugkräfte aufgenommen werden können. In dem Hybridgarn sind somit Fasern und Kunststoff ausgebildet und der Kunststoff ist vorzugsweise strangförmig bzw. faserförmig in dem Hybridgarn vorhanden zusammen mit dem Fasern als Verstärkungsfasern aus einem anderen Material als Kunststoff zur Aufnahme großer Zugkräfte. Das Hybridgarn kann einen Strang bzw. eine Faser oder auch mehrere Stränge bzw. mehrere Fasern aus Kunststoff aufweisen. Der Durchmesser des wenigstens einen Stranges aus Kunststoff in dem Hybridgarn ist vorzugsweise kleiner als der Durchmesser des zu extrudierenden Stranges aus faserverstärktem Kunststoff.

In einer ergänzenden Variante umfasst die Klebepistole eine Schneideeinheit zum Durchtrennen eines Stranges aus, vorzugsweise faserverstärkten, Kunststoff. Zweckmäßig ist die Schneideeinheit von einer Steuerungs- und/oder Regeleinheit automatisch gesteuert, wie die Fördervorrichtung. Mittels eines Aktivierungsorgans kann die Klebepistole ein- und ausgeschaltet werden. Bei einem eingeschalteten Aktivierungsorgan bzw. einem betätigten Aktivierungsorgan erfolgt ein Betrieb der Fördervorrichtung und nach einem Deaktivieren bzw. Abschalten des Aktivierungsorgans wird selbsttätig zunächst die Fördervorrichtung abgeschaltet und anschließend erfolgt ein Durchtrennen des Stranges mittels der Schneideeinheit. Soweit bei der Aktivierung des Aktivierungsorgans die beiden Heizeinrichtungen noch nicht eine ausreichende Temperatur aufweisen, wird von der Steuerungs- und/oder Regeleinheit mittels der Aktivierung der Heizeinrichtungen selbsttätig zunächst der Extrusionskanal und der Pultrusionskanal auf eine entsprechende notwendige Temperatur aufgewärmt und erst anschließend erfolgt die Aktivierung der Fördervorrichtung.

In einer zusätzlichen Ausgestaltung umfasst die Klebepistole ein Aktivierungsorgan zum Ein- und Ausschalten der Klebepistole, insbesondere der ersten und zweiten Heizeinrichtung und/oder der Fördervorrichtung.

In einer weiteren Ausgestaltung umfasst die Klebepistole eine Kühleinrichtung zum Kühlen des Stranges vor der Einführung des Stranges in die Extrusionseinheit. Vorzugsweise ist die Kühleinrichtung an der Pultrusionseinheit, insbesondere an einem Endbereich der Pultrusionseinheit in Förderrichtung, ausgebildet.

In einer Variante umfasst die Kühleinrichtung ein Fördermittel, insbesondere ein Gebläse, einen Ventilator oder eine Pumpe, zum Fördern eines Kühlfuides, insbesondere Luft oder Flüssigkeit. Das Kühlfluid kann beispielsweise durch einen Kühlkanal geleitet werden und in dem Kühlkanal wird Wärme von dem Strang auf das Kühlfluid übertragen und anschließend wird Wärme von dem Kühlfluid an die Umgebung abgeleitet, insbesondere mit einem Wärmeübertrager. Abweichend hiervon kann mit einem Gebläse Luft zu dem Strang in dem Freiraum gefördert werden zum Kühlen des Stranges zwischen der Pultrusionseinheit und der Extrusionseinheit. Vorzugsweise ist die Kühleinrichtung innerhalb eines von dem Gehäuse begrenzten Innenraumes angeordnet.

Erfindungsgemäßes Verfahren zum Betreiben einer insbesondere einer in dieser Schutzrechtsanmeldung beschriebenen Klebepistole, mit den Schritten: Zuführen von Hybridgarn mit Fasern und, vorzugsweise thermoplastischen oder duroplastischen, Kunststoff zu einer Pultrusionseinheit, Erwärmen des Hybridgarns in einer Pultrusionseinheit, so dass die Fasern und der, vorzugsweise thermoplastische oder duroplastische, Kunststoff miteinander stoffschlüssig verbunden werden und der, vorzugsweise thermoplastische oder duroplastische, Kunststoff konsolidiert wird, Abkühlen des Stranges aus Fasern und Kunststoff nach dem Erwärmen in der Pultrusionseinheit, Zuführen des abgekühlten Stranges aus Fasern und Kunststoff in eine Extrusionseinheit, Erwärmen des abgekühlten Stranges aus Fasern und Kunststoff in der Extrusionseinheit, Ausformen der Querschnittsform des Stranges aus Fasern und Kunststoff in der Extrusionseinheit und Ausleiten des Stranges aus Fasern und Kunststoff an einer Austrittsdüse der Extrusionseinheit.

Zweckmäßig wird der Strang aus Fasern und Kunststoff in einem Freiraum zwischen der Pultrusionseinheit und der Extrusionseinheit abgekühlt und/oder wird mit einer Kühleinrichtung gekühlt.

In einer weiteren Ausgestaltung ist die erste Heizeinrichtung und/oder die zweite Heizeinrichtung eine elektrische Widerstandsheizung. Vorzugsweise ist mit der ersten Heizeinrichtung der Pultrusionskanal und/oder ein Rohr zur Begrenzung des Pultrusionskanales erwärmbar. Vorzugsweise ist mit der zweiten Heizeinrichtung der Extrusionskanal und/oder ein Rohr zur Begrenzung des Extrusionskanales erwärmbar.

In einer Variante umfasst die Klebepistole wenigstens eine Heizeinrichtung.

In einer weiteren Ausgestaltung ist die Fördervorrichtung von einem Motor, insbesondere Elektromotor angetrieben. Vorzugsweise umfasst die Klebepistole einen Motor, insbesondere Elektromotor, zum Antrieb der Fördervorrichtung.

Zweckmäßig ist das Lagerungsmittel ein Stab zur Lagerung einer Spule ist.

In einer weiteren Ausgestaltung ist die Schneideeinheit als ein Schneidestutzen ausgebildet.

In einer weiteren Variante ist die Schneideeinheit mittels eines Antriebsorganes, insbesondere ein Elektromotor oder Elektromagnet, bewegbar.

In einer weiteren Ausgestaltung umfasst die Klebepistole einen Vibrationsmotor zum Versetzten der Schneideeinheit in eine Vibrations- oder Rüttelbewegung.

In einer zusätzlichen Ausführungsform umfasst die Klebepistole ein Stellorgan zur Steuerung und/oder Regelung der Vorschubgeschwindigkeit des Stranges in der Pultrusionseinheit und/oder Extrusionseinheit, insbesondere ist mit dem Stellorgan die Fördervorrichtung steuerbar und/oder regelbar.

In einer weiteren Variante umfasst die Klebepistole eine Energieversorgungseinheit, insbesondere eine Batterie oder eine Brennstoffzelle.

Erfindungsgemäß umfasst die Klebepistole eine Steuerungs- und/oder Regeleinheit zur Steuerung und/oder Regelung der Klebepistole.

In einer zusätzlichen Variante ist die Austrittsdüse lösbar, vorzugsweise mit einer form- und/oder kraftschlüssigen Verbindung, insbesondere eine Clips- oder Rastverbindung, an der übrigen Klebepistole, insbesondere der Extrusionseinheit befestigt, so dass Austrittsdüsen mit unterschiedlichen Querschnittsformen an der Klebepistole befestigbar sind. Die unterschiedlichen Querschnittsformen sind beispielsweise ein Kreis, ein Dreieck, ein Rechteck, insbesondere ein Quadrat. Damit können Klebestränge mit diesen Querschnittsformen aus der Klebepistole extrudiert werden.

In einer weiteren Ausgestaltung umfasst die Klebepistole mehrere Lagerungsmittel. Damit können an der Klebepistole mehrere Spulen gelagert werden.

In einer weiteren Variante ist das wenigstens eine Lagerungsmittel, insbesondere sind sämtliche Lagerungsmittel, innerhalb eines von dem Gehäuse begrenzten Innenraumes angeordnet.

Vorzugsweis ist die wenigstens eine Spule, insbesondere sind sämtliche Spulen, innerhalb eines von dem Gehäuse begrenzten Innenraumes angeordnet.

In einer weiteren Ausgestaltung sind die erste Heizeinrichtung und die zweite Heizeinrichtung in einem Abstand zueinander ausgebildet, insbesondere beträgt der Abstand wenigstens 0,5 cm, 1 cm, 2 cm, 3 cm oder 5 cm.

In einer ergänzenden Ausgestaltung ist mit der Klebepistole ein in dieser Schutzrechtsanmeldung beschriebenes Verfahren zum Betreiben der Klebepistole ausführbar.

In einer ergänzenden Ausgestaltung weist die Klebepistole, insbesondere das Gehäuse der Klebepistole, eine beliebige Form auf. Die Form der Klebepistole kann somit auch eine andere Form als die einer Pistole sein. Vorzugsweise weist die Klebepistole einen Halteabschnitt zum manuellen Halten bzw. Greifen der Klebepistole auf.

In einer weiteren Ausgestaltung wird für die Herstellung des Stranges als erster Schritt das Pultrudieren ausgeführt und als zweiter Schritt wird das Extrudieren ausgeführt, so dass der in dem ersten Schritt teilweise hergestellten pultrudierte Strang in dem zweiten Schritt mit Extrudieren nachbearbeitet wird.

Zweckmäßig werden Hybridgarne mit Fasern und Kunststoff als Matrix zu der Pultrusionseinheit gefördert.

Der Strang wird hergestellt, so dass zwischen den Fasern der Kunststoff als die Matrix angeordnet ist. In dem Strang sind die Fasern mittels der Matrix stoffschlüssig miteinander fest verbunden, da die Matrix erhärtet nach dem Austreten aus der Klebepistole. Die Fasern sind dabei vorzugsweise auch an der Außenseite des extrudierten Stranges angeordnet, so dass an der Außenseite des Stranges die Fasern sichtbar bzw. greifbar sind. Insbesondere sind somit nicht in einem inneren Bereich des Stranges die Fasern angeordnet und in einer äußeren Hülle die Matrix. Vielmehr sind die Fasern und der Kunststoff als die Matrix auf die Querschnittsform verteilt und zwischen den Fasern ist auch die Matrix angeordnet. Vorzugsweise umfasst dabei ein Strang beispielsweise wenigstens zwei, drei, fünf oder zehn Fasern.

In einer weiteren Ausführungsform werden in der Pultrusionseinheit während der Pultrusion mittels der Matrix die Fasern stoffschlüssig miteinander verbunden, insbesondere indem die Matrix erwärmt und/oder erhärtet wird und/oder die Matrix wird während des Fördern von der Pultrusionseinheit zu der Extrusionseinheit abgekühlt und/oder erhärtet, so dass dadurch die Fasern stoffschlüssig miteinander verbunden werden und/oder mittels der Fördervorrichtung, beispielsweise zwei Förderrollen, werden die Fasern und die Matrix gefördert, insbesondere indem die Fördervorrichtung auf die Fasern mit der Matrix während des Fördern der Fasern mit der Matrix von der Pultrusionseinheit zu der Extrusionseinheit auf die Fasern mit der Matrix einwirkt und/oder die Fasern und die Matrix werden mittels Pultrusion zuerst stoffschlüssig, insbesondere mittels Erwärmen und/oder Erhärten der Matrix, miteinander verbunden und anschließend wird beim Extrudieren in der Extrusionseinheit die Querschnittsform des Stranges ausgeformt und/oder der Strang wird mit einem maximalen Durchmesser zwischen 1 mm und 30 mm, insbesondere zwischen 2 mm und 20 mm, extrudiert.

In einer weiteren Ausführungsform werden in der Pultrusionseinheit die Fasern mit Kunststoff zuerst erwärmt, während das Fördern der Fasern mit dem Kunststoff von der Pultrusionseinheit zu der Extrusionseinheit die Fasern und der Kunststoff abkühlen und in der Extrusionseinheit der Fasern mit dem Kunststoff nochmals erwärmt werden.

In einer weiteren Ausgestaltung werden in der Pultrusionseinheit Fasern aus einem anderen Material als Kunststoff und Kunststoff stoffschlüssig miteinander verbunden.

In eine ergänzenden Variante wird der Strang hergestellt, so dass der Massenanteil oder Volumenanteil der Fasern wenigstens 30%, 40%, 60% oder 80% beträgt und/oder der Strang wird hergestellt, so dass der Massenanteil oder Volumenanteil des Kunststoffes weniger als 70%, 60%, 40% oder 20% beträgt und/oder der Strang wird hergestellt, so dass der Strang ausschließlich aus den Fasern und der Matrix ausgebildet sind.

In einer ergänzenden Ausgestaltung wird der Strang hergestellt, so dass die Länge der Fasern, insbesondere sämtlicher Fasern, in je einem Strang im Wesentlichen der Länge des Stranges entspricht. Im Wesentlichen bedeutet dabei, dass die Länge des Stranges mit einer Abweichung von weniger als 30%, 20%, 10% oder 5% der Länge der Fasern in dem jeweiligen Strang entspricht.

Im Nachfolgenden wird ein Ausführungsbeispiel der Erfindung unter Bezugnahme auf die beigefügten Zeichnungen näher beschrieben.

Es zeigt:

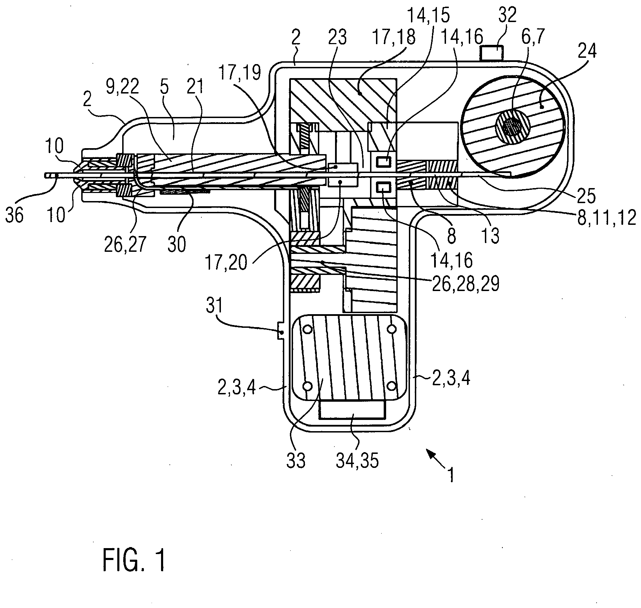

- Fig. 1: einen vereinfachten Längsschnitt einer Klebepistole.

Die Klebepistole 1 umfasst ein Gehäuse 2 aus Metall und/oder Kunststoff und das Gehäuse 2 begrenzt einen Innenraum 5. Das Gehäuse 5 bildet außerdem auch einen Griff 4 als einen Halteabschnitt 3 aus. Eine Batterie 35 als eine Energieversorgungseinheit 34 versorgt die Klebepistole mit elektrischer Energie. Eine elektronische Steuerungs- und/oder Regeleinheit 33 steuert und/oder regelt den Betrieb der Klebepistole 1.

Eine Pultrusionseinheit 8 und eine Extrusionseinheit 9 sind innerhalb des Innenraumes 5 angeordnet. In der Pultrusionseinheit 8 ist ein Pultrusionskanal 13 ausgebildet und in einer Richtung von rechts nach links gemäß der Darstellung in Fig. 1 weist der Pultrusionskanal 13 zunächst einen konisch sich verjüngenden Abschnitt (nicht dargestellt) und anschließend einen Abschnitt mit einem konstanten Durchmesser auf. An dem Pultrusionskanal 13 in dem Abschnitt mit dem konstanten Durchmesser ist in einer Richtung gemäß der Darstellung in Fig. 1 von rechts nach links sowie in einer Förderrichtung von Hybridgarnen 25 bzw. des herzustellenden Stranges 36 zuerst eine erste Heizeinrichtung 12 angeordnet und anschließend eine Kühleinrichtung 14. An der Kühleinrichtung 14 ist ein Kühlkanal 16 ausgebildet, durch den ein Kühlfluid, nämlich Luft, mittels eines Gebläses 15, durchgeleitet wird zur Kühlung des teilweise hergestellten Stranges 36. Die Klebepistole 1 kann auch ohne der Kühleinrichtung 14 ausgebildet sein und das Abkühlen des Stranges 36 erfolgt innerhalb eines Freiraumes 23 zwischen der Pultrusionseinheit 8 und der Extrusionseinheit 9.

Die Extrusionseinheit 9 umfasst einen Extrusionskanal 21 und der Extrusionskanal 21 umfasst einen ersten sich konisch verjüngenden Abschnitt (nicht dargestellt) und einen zweiten Abschnitt mit einem konstanten Durchmesser. An dem zweiten Abschnitt des Extrusionskanales 21 mit dem konstanten Durchmesser ist eine zweite Heizeinrichtung 22 ausgebildet. Die erste und zweite Heizeinrichtung 12, 22 ist vorzugsweise als eine elektrische Widerstandsheizung 11 ausgebildet. In der Förderrichtung des herzustellenden Stranges 36 durch den Extrusionskanal 21 ist zuerst der konisch sich verjüngende Abschnitt des Extrusionskanales 21 und anschließend der Abschnitt des Extrusionskanales 21 mit dem konstanten Durchmesser ausgebildet. Zwischen der Pultrusionseinheit 8 und der Extrusionseinheit 9 ist in dem Freiraum 23 eine Fördervorrichtung 17 ausgebildet. Die Fördervorrichtung 17 umfasst eine erste Förderrolle 19 und ein zweites Förderrolle 20, welche von einem Elektromotor 18 angetrieben werden. Der teilweise hergestellte Strang 36 ist zwischen den beiden Förderrollen 19, 20 angeordnet, so dass der teilweise hergestellte Strang 36 mit der Fördervorrichtung 17 aus der Pultrusionseinheit 8 herausgezogen wird und mit der Fördervorrichtung 17 in die Extrusionseinheit 9 hingeschoben wird.

Die Pultrusionseinheit 8 und die Extrusionseinheit 9 sind mit einem Verbindungsteil, beispielsweise dem Gehäuse 2, miteinander verbunden. An dem Gehäuse 2 ist Lagerungsmittel 6 als ein Lagerungsstab 7 fixiert. An dem Lagerungsstab 7 bzw. Lagerstutzen 7 ist eine Spule 24 gelagert und auf der Spule 24 ist ein Hybridgarn 25 aufgewickelt bzw. aufgerollt. Das Hybridgarn 25 besteht aus Fasern als Glasfasern und weist ferner die Matrix aus einem unkonsolidierten thermoplastischen Kunststoff auf. Die Matrix als dem thermoplastischen Kunststoff ist dabei in dem Hybridgarn 25 als eine vorzugsweise faserförmige bzw. strangförmige Matrix bzw. als eine Matrixfaser bzw. ein Matrixstrang angeordnet. Das Hybridgarn 25 ist biegbar und kann somit von der Spule 24 abgerollt werden.

Eine Schneideeinheit 26 dient dazu, den an der Extrusionseinheit 9 extrudierten Strang 36 abzuschneiden. Die Schneideeinheit 26 umfasst einen beweglichen biegbaren Schneidestutzen 27 und der Schneidestutze 27 ist ein einem Lagerkanal oder Lagerrohr gelagert und wird von einem Elektromotor 29 als einem Antriebsorgan 28 für die Schneideeinheit 26 innerhalb des Lagerkanales bewegt. Der Lagerkanal ist teilweise auch gekrümmt ausgebildet und zwischen dem Lagerkanal und dem Extrusionskanal 21 ist eine Kreuzung vorhanden, so dass der Schneidestutzen 27 auch in den Extrusionskanal 21 eingeführt werden kann zum Durchtrennen des Stranges 36. Ein Vibrationsmotor 30 versetzt die Schneideinheit 26 während des Durchtrennens des Stranges 36 in eine Vibrations- oder Rüttelbewegung, so dass dadurch der Vorgang des Durchtrennens verbessert wird. Abweichend hiervon kann die Schneideeinheit 26 auch an einer Austrittsdüse 10 ausgebildet sein (nicht dargestellt).

Während der Herstellung des Stranges 36 aus dem Verbundmaterial mit den Glasfasern und thermoplastischen Kunststoff als Kleber wird das Verbundmaterial gemäß der Darstellung in Fig. 1 zuerst durch die Pultrusionseinheit 8 und anschließend durch die Extrusionseinheit 9 mittels der Fördervorrichtung 17 gefördert, jedoch erfolgen beide Vorgänge aufgrund der Länge des Stranges 36 und des Abstandes zwischen der Pultrusionseinheit 8 und der Extrusionseinheit 9 insgesamt gleichzeitig, jedoch bezüglich eines fiktiven Punktes auf dem Strang 36 zeitlich nacheinander. Während des Förderns des Verbundmateriales wird somit das Hybridgarn 25 von der Spule 24 abgerollt und in den konisch sich verjüngenden Abschnitt des Pultrusionskanales 13 eingeführt. An dem zweiten Abschnitt des Pultrusionskanales 13 mit dem konstanten Durchmesser werden das Hybridgarn 25 mit der ersten Heizeinrichtung 12 erwärmt, so dass der thermoplastische Kunststoff als der Matrix an dem Hybridgarn 25 schmilzt und dadurch die Glasfasern mittels der Matrix aus dem thermoplastischen Kunststoff stoffschlüssig miteinander verbunden werden als Pultrusionsvorgang. Anschließend wird das Verbundmaterial mit den Fasern und dem thermoplastischen Kunststoff zu dem Abschnitt des Pultrusionskanales 13 mit der Kühleinrichtung 14 gefördert bzw. bewegt, so dass dadurch das Verbundmaterial mit den Glasfasern und dem thermoplastischen Kunststoff abgekühlt und dadurch teilweise erhärtet wird.

Nach dem Austreten des Verbundmateriales aus den Fasern und dem thermoplastischen Kunststoff wird das Verbundmaterial aus dem bereits teilweise hergestellten Strang 36 von der Fördervorrichtung 17 in die Extrusionseinheit 9 eingefördert bzw. hineingeführt. Aufgrund des Abkühlens des Verbundmateriales mit den Fasern in der Kühleinrichtung 14 kann das Verbundmaterial von der Fördervorrichtung 17 gefördert werden. In der Extrusionseinheit 9 wird das Verbundmaterial mit den Fasern und dem thermoplastischen Kunststoff an dem Abschnitt des Extrusionskanales 21 mit dem konstanten Durchmesser von der zweiten Heizeinrichtung 22 wieder geringfügig soweit erwärmt, dass an dem Endbereich in der Förderrichtung des Extrusionskanales 21 bzw. der Austrittsdüse 10 die abschließende Formgebung der Querschnittsform des herzustellenden Stranges 36 ausgeformt wird. Das in Fig. 1 linke Ende des Extrusionskanales 21 bzw. die Austrittsdüse 10 weist eine kreisförmige Querschnittsform auf, so dass dadurch ein Strang 36 mit einem kreisförmigen Querschnitt hergestellt wird. Dieser Strang 36 ist nach dem Abkühlen nicht mehr biegbar, weil der thermoplastische Kunststoff konsolidiert ist. Aufgrund der Temperatur des Stranges 36 nach dem Austreten aus der Austrittsdüse 10 wirkt der thermoplastische Kunststoff als ein Klebstoff, d. h. es kann einfach eine stoffschlüssige Verbindung zwischen dem extrudierten und noch auf einer hohen Temperatur befindlichen Strang 36 und einem Bauteil in der Umgebung hergestellt werden.

Ein Aktivierungsorgan 31, beispielsweise eine Drucktaste, dient zum Ein- und Ausschalten der Klebepistole 1. Das Aktivierungsorgan 31 steht mittels nicht dargestellter Datenleitungen mittels der Steuer- und/oder Regeleinheit 33 in Verbindung. Die Steuerungs- und/oder Regeleinheit 33 steuert die Fördervorrichtung 17, die erste Heizeinrichtung 12 und die zweite Heizeinrichtung 22 sowie die Kühleinrichtung 14 selbsttätig. Mittels nicht dargestellter Temperatursensoren kann die Temperatur in dem Pultrusionskanal 13 und dem Extrusionskanal 21 erfasst werden. Bei einem Betätigen des Aktivierungsorgans 31 wird von der Steuer- und/oder Regeleinheit 33 zunächst überprüft, ob die Temperatur in dem Pultrusionskanal 13 und dem Extrusionskanal 21 ausreichend ist für ein Schmelzen des thermoplastischen Kunststoffs. Sofern die Temperatur nicht ausreichend ist, wird zunächst mittels der ersten Heizeinrichtung 12 und der zweiten Heizeinrichtung 22 der Pultrusionskanal 13 und der Extrusionskanal 21 auf die erforderliche Temperatur erwärmt und erst anschließend wird die Fördervorrichtung 17 aktiviert. Sofern die Temperatur an dem Pultrusionskanal 13 und dem Extrusionskanal 21 ausreichend ist für das Schmelzen des thermoplastischen Kunststoffs, erfolgt nach dem Betätigen des Aktivierungsorgans 31 sofort die Aktivierung der Fördervorrichtung 17. Nach dem Loslassen bzw. Deaktivieren des Aktivierungsorgans 31 wird die Fördervorrichtung 17 abgeschaltet und die Schneideeinheit 26 aktiviert sowie auch vorzugsweise der Vibrationsmotor 30 aktiviert. An dem Gehäuse 2 ist zusätzlich ein Stellorgan 32 ausgebildet. Mittels des Stellorgans 32 kann die Fördergeschwindigkeit des Strangs 36 von der Fördervorrichtung 17 gesteuert und/oder geregelt werden.

Insgesamt betrachtet sind mit der erfindungsgemäßen Klebepistole 1 und dem erfindungsgemäßen Verfahren zum Betreiben der Klebepistole 1 wesentliche Vorteile verbunden. An der Spule 24 kann eine große Menge an thermoplastischem Kunststoff an der Klebepistole 1 gelagert werden, da das Hybridgarn 25 raumsparend auf der Spule 24 aufgewickelt ist. Aufgrund der Verwendung des Hybridgarns 25 mit Fasern, insbesondere Glasfasern, und dem thermoplastischen Kunststoff als einem thermoplastischen Klebstoff kann aus der Austrittsdüse 10 der Strang 36 aus dem Verbundmaterial extrudiert werden. Dieses Verbundmaterial weist aufgrund der Anordnung der Fasern zwischen dem thermoplastischen Kunststoff eine sehr hohe Zugfestigkeit auf. Dadurch können in vorteilhafter Weise mittels des Strangs 36 auch Bauteile stoffschlüssig miteinander verbunden werden, bei denen es erforderlich ist, dass die von dem Strang 36 ausgebildete Klebeverbindung auch hohe Zugkräfte aufnehmen kann. Der Strang 36 kann somit nicht nur zur einfachen Herstellung einer Klebeverbindung zwischen zwei Bauteilen eingesetzt werden, sondern auch dazu, um Klebeverbindungen mit einer hohen Zugfestigkeit herstellen zu können. Darüber hinaus können mittels des Strangs 36 somit auch entsprechende Verstärkungsstrukturen auf bereits vorhandenen Bauteilen ausgebildet werden. Der Einsatz der Klebepistole 1 ist somit in der Handhabung wesentlich verbessert und ermöglicht es außerdem, das Einsatzgebiet der Klebepistole 1 auf zusätzliche Anwendungen für das Erfordernis von großen Zugkräften an der Klebeverbindung mittels des Stranges 36 zu erweitern.

## Patentansprüche

1. Klebepistole (1) für einen Strang (36), der vorzugsweise einen thermoplastischen Kunststoff, der eine Schmelztemperatur aufweist, beinhaltet, umfassend:
- ein Gehäuse (2),
- wenigstens ein Lagerungsmittel (6) zur Lagerung des Strangs,
- eine Heizeinrichtung (12, 22)
- eine Pultrusionseinheit (8) mit einem Pultrusionskanal zum Konsolidieren des Stranges,
- eine Extrusionseinheit (9) mit einem Extrusionskanal zum Formgeben und Extrudieren des Stranges (36),
- eine Fördervorrichtung (17), die so konfiguriert ist, dass sie den Strang durch die Pultrusionseinheit und durch die Extrusionseinheit fördert,
- eine Austrittsdüse (10) zum Ausleiten des erwärmten Strangs aus der Klebepistole **dadurch gekennzeichnet, dass** die Klebepistole weiterhin umfasst:
- einen Pultrusionskanal-Temperatursensor,
- einen Extrusionskanal-Temperatursensor und
- eine Aktivierungseinheit (31), die mit einer Steuereinheit (33) verbunden ist, wobei die Steuereinheit so konfiguriert ist, dass sie die Heizvorrichtung und die Fördervorrichtung steuert und Eingaben von dem Pultrusionskanal-Temperatursensor und dem Extrusionskanal-Temperatursensor empfängt, wobei die Steuereinheit so konfiguriert ist, dass sie die Fördervorrichtung aktiviert, wenn eine erste Temperatur in dem Pultrusionskanal und eine zweite Temperatur in dem Extrusionskanal zum Schmelzen des thermoplastischen Kunststoffs ausreichen.

2. Klebepistole nach Anspruch 1,
**dadurch gekennzeichnet, dass**
in Förderrichtung des Strangs die Pultrusionseinheit (8) vor der Extrusionseinheit (9) ausgebildet ist.

3. Klebepistole nach Anspruch 1 oder 2,
**dadurch gekennzeichnet, dass**
die Austrittsdüse (10) an der Extrusionseinheit (9) ausgebildet ist.

4. Klebepistole nach einem oder mehreren der vorhergehenden Ansprüche,
**dadurch gekennzeichnet, dass**
die Pultrusionseinheit (8) eine erste Heizeinrichtung umfasst und die Extrusionseinheit eine zweite Heizeinrichtung umfasst.

5. Klebepistole nach einem oder mehreren der vorhergehenden Ansprüche,
**dadurch gekennzeichnet, dass**
zwischen der Pultrusionseinheit (8) und der Extrusionseinheit (9) ein Freiraum (23) vorhanden ist, so dass der Strang nach dem Austreten aus einem Pultrusionskanal (13) der Pultrusionseinheit (8) und vor dem Einführen in einen Extrusionskanal (21) der Extrusionseinheit (9) innerhalb des Freiraumes (23) angeordnet ist.

6. Klebepistole nach einem oder mehreren der vorhergehenden Ansprüche,
**dadurch gekennzeichnet, dass**
die Fördervorrichtung (17) zwischen der Pultrusionseinheit (8) und der Extrusionseinheit (9) angeordnet ist, insbesondere in dem Freiraum (23) zwischen der Pultrusionseinheit (8) und der Extrusionseinheit (9).

7. Klebepistole nach einem oder mehreren der vorhergehenden Ansprüche,
**dadurch gekennzeichnet, dass**
die Fördervorrichtung (17) als wenigstens eine Förderrolle (19, 20) ausgebildet ist.

8. Klebepistole nach Anspruch 7,
**dadurch gekennzeichnet, dass**
die Fördervorrichtung (17) zwei Förderrollen (19, 20) umfasst zur Anordnung des Stranges (36) zwischen den zwei Förderrollen (19, 20), insbesondere der Abstand zwischen den Förderflächen der zwei Förderrollen (19, 20) zur Auflage auf den Strang (36) im Wesentlichen dem Durchmesser des Pultrusionskanales (13) an einem Ende des Pultrusionskanales (13) in Förderrichtung des Strangs entspricht und/oder dem Durchmesser des Extrusionskanales (21) an einem Anfang des Extrusionskanales (21) in Förderrichtung des Strangs entspricht.

9. Klebepistole nach einem oder mehreren der vorhergehenden Ansprüche,
**dadurch gekennzeichnet, dass**
das Lagerungsmittel (6) zur Lagerung von auf einer Spule (24) aufgewickeltem Strangs dient.

10. Klebepistole nach einem oder mehreren der vorhergehenden Ansprüche,
**dadurch gekennzeichnet, dass**
die Klebepistole eine Spule (24) mit aufgewickeltem strangförmigem unkonsolidiertem, vorzugsweise thermoplastischem oder duroplastischem, Kunststoff umfasst.

11. Klebepistole nach Anspruch 10,
**dadurch gekennzeichnet, dass**
der strangförmige, vorzugsweise thermoplastische oder duroplastische, Kunststoff als ein Hybridgarn (25) mit Fasern, insbesondere Glasfasern, Karbonfasern und/oder Aramidfasern, und dem, vorzugsweise thermoplastischen oder duroplastischen, Kunststoff ausgebildet ist.

12. Klebepistole nach einem oder mehreren der vorhergehenden Ansprüche,
**dadurch gekennzeichnet, dass**
die Klebepistole (1) eine Schneideeinheit (26) zum Durchtrennen des Stranges (36) aus, vorzugsweise faserverstärktem, Kunststoff umfasst.

13. Klebepistole nach einem oder mehreren der vorhergehenden Ansprüche,
**dadurch gekennzeichnet, dass**
die Klebepistole (1) ein Aktivierungsorgan (31) zum Ein- und Ausschalten der Klebepistole (1), insbesondere der ersten und zweiten Heizeinrichtung (11 , 12) und/oder der Fördervorrichtung (17), umfasst.

14. Verfahren zum Betreiben einer Klebepistole (1) gemäß einem oder mehrerer der vorhergehenden Ansprüche, mit den Schritten:
- Zuführen von Hybridgarn (25) mit Fasern und, vorzugsweise thermoplastischem oder duroplastischem, Kunststoff zu einer Pultrusionseinheit (9),
- Erwärmen des Hybridgarns (25) in einer Pultrusionseinheit (8), so dass die Fasern und der, vorzugsweise thermoplastische oder duroplastische, Kunststoff miteinander stoffschlüssig verbunden werden,
- Abkühlen des Stranges (36) aus Fasern und Kunststoff nach dem Erwärmen in der Pultrusionseinheit (8),
- Zuführen des abgekühlten Stranges (36) aus Fasern und Kunststoff in eine Extrusionseinheit (9),
- Erwärmen des abgekühlten Stranges (36) aus Fasern und Kunststoff in der Extrusionseinheit (9),
- Ausformen der Querschnittsform des Stranges (36) aus Fasern und Kunststoff in der Extrusionseinheit (9) und Ausleiten des Stranges (36) aus Fasern und Kunststoff an einer Austrittsdüse (10) der Extrusionseinheit (9).

15. Verfahren nach Anspruch 14, **dadurch gekennzeichnet, dass** der Strang (36) aus Fasern und Kunststoff in einem Freiraum zwischen der Pultrusionseinheit (8) und der Extrusionseinheit (9) abgekühlt wird und/oder mit einer Kühleinrichtung (14) gekühlt wird.

## Claims

1. A glue gun (1) for a strand (36), preferably comprising a thermoplastic material having a melting temperature, comprising:
- a housing (2),
- at least one storage means (6) for supporting the strand,
- a heating device (12, 22),
- a pultrusion unit (8) with a pultrusion channel for consolidating the strand,
- an extrusion unit (9) with an extrusion channel for shaping and extruding the strand (36),
- a conveying device (17) configured to convey the strand through the pultrusion unit and through the extrusion unit,
- an outlet nozzle (10) for discharging the heated strand from the glue gun (1), **characterized in that** the glue gun further comprises:
- a pultrusion channel temperature sensor,
- an extrusion channel temperature sensor, and
- an activation unit (31) connected to a control unit (33), wherein the control unit is configured to control the heating device and the conveyor device, and to receive inputs from the pultrusion channel temperature sensor and the extrusion channel temperature sensor,
wherein the controller is configured to activate the conveyor when a first temperature in the pultrusion channel and a second temperature in the extrusion channel are sufficient to melt the thermoplastic.

2. Glue gun according to claim 1,
**characterized in that**
the pultrusion unit (8) is arranged before the extrusion unit (9) in the conveying direction of the strand.

3. Glue gun according to claim 1 or 2,
**characterized in that**
the outlet nozzle (10) is formed on the extrusion unit (9).

4. Glue gun according to one or more of the preceding claims,
**characterized in that**
the pultrusion unit (8) comprises a first heating device and the extrusion unit comprises a second heating device.

5. Glue gun according to one or more of the preceding claims,
**characterized in that**
there is a free space (23) between the pultrusion unit (8) and the extrusion unit (9) so that the strand, after emerging from the pultrusion channel (13) of the pultrusion unit (8) and prior to insertion into the extrusion channel (21) of the extrusion unit (9), is arranged within the free space (23).

6. Glue gun according to one or more of the preceding claims,
**characterized in that**
the conveyor device (17) is arranged between the pultrusion unit (8) and the extrusion unit (9), in particular in the free space (23) between the pultrusion unit (8) and the extrusion unit (9).

7. Glue gun according to one or more of the preceding claims,
**characterized in that**
the conveyor device (17) comprises at least one conveyor roller (19, 20).

8. Glue gun according to claim 7,
**characterized in that**
the conveyor device (17) comprises two conveyor rollers (19, 20) for arranging the strand (36) between the two conveyor rollers (19, 20), in particular the distance between the conveying surfaces of the two conveyor rollers (19, 20) for bearing on the strand ( 36) substantially corresponds to the diameter of the pultrusion channel (13) at one end of the pultrusion channel (13) in the conveying direction of the strand and/or corresponds to the diameter of the extrusion channel (21) at a beginning of the extrusion channel (21) in the conveying direction of the strand.

9. Glue gun according to one or more of the preceding claims,
**characterized in that**
the storage means (6) serve to store strands wound on a spool (24).

10. Glue gun according to one or more of the preceding claims,
**characterized in that**
the glue gun comprises a spool (24) with a wound strand of unconsolidated, preferably thermoplastic or thermosetting, plastic.

11. Glue gun according to claim 10,
**characterized in that**
the strand-like, preferably thermoplastic or thermosetting, plastic is designed as a hybrid yarn (25) with fibers, in particular glass fibers, carbon fibers, and/or aramid fibers, and the preferably thermoplastic or thermosetting plastic.

12. Glue gun according to one or more of the preceding claims,
**characterized in that**
the glue gun (1) comprises a cutting unit (26) for severing the strand (36) of, preferably fiber-reinforced, plastic.

13. Glue gun according to one or more of the preceding claims,
**characterized in that**
the glue gun (1) comprises an activation element (31) for switching the glue gun (1), in particular the first and second heating devices (11, 12) and/or the conveying device (17), on and off.

14. Method for operating a glue gun (1) according to one or more of the preceding claims, with the steps:
- feeding hybrid yarn (25) with fibers and, preferably thermoplastic or thermosetting, plastic to a pultrusion unit (9),
- heating the hybrid yarn (25) in a pultrusion unit (8) so that the fibers and the preferably thermoplastic or thermosetting plastic are bonded together,
- cooling the strand (36) of fibers and plastic after heating in the pultrusion unit (8),
- feeding the cooled strand (36) of fibers and plastic into an extrusion unit (9),
- heating the cooled strand (36) of fibers and plastic in the extrusion unit (9),
- forming the cross-sectional shape of the strand (36) of fibers and plastic in the extrusion unit (9) and diverting the strand (36) of fibers and plastic at an outlet nozzle (10) of the extrusion unit (9).

15. The method according to claim 14, **characterized in that** the strand (36) of fibers and plastic is cooled in a free space between the pultrusion unit (8) and the extrusion unit (9) and/or is cooled with a cooling device (14).

## Revendications

1. Pistolet à colle (1) pour un brin (36) comprenant de préférence une matière thermoplastique présentant une température de fusion, comprenant :
- un boîtier (2),
- au moins un moyen de stockage (6) pour le stockage du brin,
- un dispositif de chauffage (12, 22),
- une unité de pultrusion (8) avec un canal de pultrusion pour la consolidation du brin,
- une unité d'extrusion (9) avec un canal d'extrusion pour la mise en forme et l'extrusion du brin (36),
- un dispositif de transport (17) configuré pour transporter le brin à travers l'unité de pultrusion et à travers l'unité d'extrusion,
- une buse de sortie (10) pour évacuer le brin chauffé du pistolet à colle, **caractérisé en ce que** le pistolet à colle comprend en outre :
- un capteur de température du canal de pultrusion,
- un capteur de température de canal d'extrusion, et
- une unité d'activation (31) connectée à une unité de commande (33), l'unité de commande étant configurée pour commander le dispositif de chauffage et le dispositif de transport et pour recevoir des entrées provenant du capteur de température du canal de pultrusion et du capteur de température du canal d'extrusion,
dans lequel l'unité de commande est configurée pour activer le dispositif de transport lorsqu'une première température dans le canal de pultrusion et une seconde température dans le canal d'extrusion sont suffisantes pour faire fondre la matière thermoplastique.

2. Pistolet à colle selon la revendication 1,
**caractérisé en ce que**,
dans le sens de transport du brin, l'unité de pultrusion (8) est située avant l'unité d'extrusion (9).

3. Pistolet à colle selon la revendication 1 ou 2,
**caractérisé en ce que**
la buse de sortie (10) est située sur l'unité d'extrusion (9).

4. Pistolet à colle selon l'une ou plusieurs des revendications précédentes,
**caractérisé en ce que**
l'unité de pultrusion (8) comprend un premier dispositif de chauffage et l'unité d'extrusion comprend un deuxième dispositif de chauffage.

5. Pistolet à colle selon l'une ou plusieurs des revendications précédentes,
**caractérisé en ce que**
un espace libre (23) est présent entre l'unité de pultrusion (8) et l'unité d'extrusion (9), de sorte que le brin est disposé à l'intérieur de l'espace libre (23) après être sorti d'un canal de pultrusion (13) de l'unité de pultrusion (8) et avant d'être introduit dans un canal d'extrusion (21) de l'unité d'extrusion (9).

6. Pistolet à colle selon l'une ou plusieurs des revendications précédentes,
**caractérisé en ce que**
le dispositif de transport (17) est disposé entre l'unité de pultrusion (8) et l'unité d'extrusion (9), en particulier dans l'espace libre (23) entre l'unité de pultrusion (8) et l'unité d'extrusion (9).

7. Pistolet à colle selon l'une ou plusieurs des revendications précédentes,
**caractérisé en ce que**
le dispositif de transport (17) comprend au moins un rouleau de transport (19, 20).

8. Pistolet à colle selon la revendication 7,
**caractérisé en ce que**
le dispositif de convoyage (17) comprend deux rouleaux de convoyage (19, 20) pour disposer le brin (36) entre les deux rouleaux de convoyage (19, 20), en particulier la distance entre les surfaces de convoyage des deux rouleaux de convoyage (19, 20) pour l'appui sur le brin (36) correspond sensiblement au diamètre du canal de pultrusion (13) à une terminaison du canal de pultrusion (13) dans la direction de convoyage du brin et/ou correspond au diamètre du canal d'extrusion (21) à un début du canal d'extrusion (21) dans la direction de convoyage du brin.

9. Pistolet à colle selon l'une ou plusieurs des revendications précédentes,
**caractérisé en ce que**
le moyen de stockage (6) sert à stocker le brin enroulé sur une bobine (24).

10. Pistolet à colle selon l'une ou plusieurs des revendications précédentes,
**caractérisé en ce que**
le pistolet à colle comprend une bobine (24) sur laquelle est enroulé un brin de matière plastique non consolidée, de préférence thermoplastique ou thermodurcissable.

11. Pistolet à colle selon la revendication 10,
**caractérisé en ce que**
la matière plastique en forme de brin, de préférence thermoplastique ou thermodurcissable, est conçue comme un fil hybride (25) avec des fibres, en particulier des fibres de verre, des fibres de carbone et/ou des fibres d'aramide, et de la matière plastique, de préférence thermoplastique ou thermodurcissable.

12. Pistolet à colle selon l'une ou plusieurs des revendications précédentes,
**caractérisé en ce que**
le pistolet à colle (1) comprend une unité de coupe (26) pour couper le brin (36) de matière plastique, de préférence renforcée par des fibres.

13. Pistolet à colle selon l'une ou plusieurs des revendications précédentes,
**caractérisé en ce que**
le pistolet à colle (1) comprend un organe d'activation (31) pour mettre en marche et arrêter le pistolet à colle (1), en particulier les premier et deuxième dispositifs de chauffage (11, 12) et/ou le dispositif de transport (17).

14. Procédé de mise en oeuvre d'un pistolet à colle (1) selon l'une ou plusieurs des revendications précédentes, comprenant les étapes suivantes :
- alimentation d'une unité de pultrusion (9) en fil hybride (25) comprenant des fibres et de la matière plastique, de préférence thermoplastique ou thermodurcissable,
- chauffage du fil hybride (25) dans une unité de pultrusion (8), de sorte que les fibres et la matière plastique, de préférence thermoplastique ou thermodurcissable, soient liées entre elles par liaison de matière,
- refroidissement du brin (36) de fibres et de matière plastique après chauffage dans l'unité de pultrusion (8),
- fourniture du brin refroidi (36) de fibres et de matière plastique dans une unité d'extrusion (9),
- chauffage du brin refroidi (36) de fibres et de matière plastique dans l'unité d'extrusion (9),
- mise en forme de la forme de la section transversale du brin (36) de fibres et de matière plastique dans l'unité d'extrusion (9) et évacuation du brin (36) de fibres et de matière plastique au niveau d'une buse de sortie (10) de l'unité d'extrusion (9).

15. Procédé selon la revendication 14, **caractérisé en ce que** le brin (36) de fibres et de matière plastique est refroidi dans un espace libre entre l'unité de pultrusion (8) et l'unité d'extrusion (9) et/ou est refroidi par un dispositif de refroidissement (14).
